# EUROPEAN PATENT APPLICATION

(11) **EP 3 144 327 A1**
(43) Date of publication of application: **22.03.2017**
(21) Application number: 15828000.8
(22) Date of filing: 30.07.2015
(51) Int. Cl.: C08F 2/50, C08F 2/44, C08G 59/17, C08J 3/24, C08L 33/04, C08L 63/10, C08K 3/00, C08J 5/18, G02B 5/30

(54) **RESIN COMPOSITION FOR POLARIZER PROTECTIVE FILM, POLARIZER PROTECTIVE FILM, AND POLARIZING PLATE COMPRISING SAME**

(30) Priority: 30.07.2014 KR 20140097314; 29.07.2015 KR 20150107552
(71) Applicant: LG Chem, Ltd., Seoul 07336 (KR)
(72) Inventor: LEE, Han Na, Daejeon 305-738 (KR); CHANG, Yeong Rae, Daejeon 305-738 (KR); PARK, Jun Wuk, Daejeon 305-738 (KR); HUH, Eun Soo, Daejeon 305-738 (KR)
(74) Representative: Goddar, Heinz J.
(86) International application number: PCT/KR2015/008001
(87) International publication number: WO 2016/018103

(57) **Abstract**

The present invention relates to a resin composition for a polarizer protective film, a polarizer protective film, and a polarizing plate comprising the same, and more specifically, to a resin composition for a polarizer protective film, a polarizer protective film; and a polarizing plate comprising the same, which exhibit high hardness and excellent characteristics. The polarizing plate according to the present invention exhibits high hardness, excellent curl properties, and optical properties and thus may be usefully applied in various fields.

## Description

### BACKGROUND OF THE INVENTION

### (a) Field of the Invention

This application claims the benefit of priority based on Korean Patent Application No. 10-2014-0097314 filed on July 30, 2014 and Korean Patent Application No. 10-2015-0107552 filed on July 29, 2015 with the Korean Intellectual Property Office, the disclosures of which are incorporated herein by reference in their entirety.

The present invention relates to a resin composition for a polarizer protective film, a polarizer protective film, and a polarizing plate comprising the same, and more specifically, to a resin composition for a polarizer protective film, a polarizer protective film, and a polarizing plate comprising the same, which exhibit excellent physical and optical properties.

### (b) Description of the Related Art

A liquid crystal display (LCD) is currently one of the most widely used flat panel displays. In general, the liquid crystal display has a structure in which a liquid crystal layer is sealed between a TFT (Thin Film Transistor) array substrate and a color filter substrate. When an electric field is applied to the electrodes present on the array substrate and the color filter substrate, the arrangement of liquid crystal molecules in the liquid crystal layer sealed therebetween is changed, thereby displaying an image.

On the other hand, a polarizing plate is disposed outside the array substrate and the color filter substrate. The polarizing plate can control polarization of light by selectively transmitting a light component in a specific direction therethrough among light emitted from a backlight unit and light having passed through the liquid crystal layer.

Generally, a polarizing plate has a structure in which a protective layer for supporting and protecting the polarizer is adhered to a polarizer capable of polarizing light in a specific direction.

As the protective film, a film composed of triacetyl cellulose (TAC) is widely used. Also, in order to achieve a film having high hardness and wear resistance properties, a protective film for coating a hard coat layer have been proposed.

On the other hand, recently, a liquid crystal device has application in a wide range of uses and is used in devices of many fields, and thus interest in the hardness increase and the thickness reduction of the polarizing plate is increasing.

However, there is still a need to develop a polarizing plate that has sufficient hardness, exhibits a low thickness so as to make thin, and exhibits sufficient curl properties so as to be suitable for the mass production process.

### SUMMARY OF THE INVENTION

For resolving the aforesaid problems of the prior arts, it is an object of the present invention to provide a resin composition for a polarizer protective film, a polarizer protective film, and a polarizing plate comprising the same, which exhibit high hardness and high transparency, enable thinning the overall polarizing plate, and at the same time are excellent in the curl properties, coating workability and crack resistance.

To achieve the above objects, one aspect of the present invention is to provide a resin composition comprising: a cationically curable monomer; a cationic photopolymerization initiator; a radically curable monomer; and a radical photopolymerization initiator.

Also, the present invention provides a polarizer protective film including: a substrate; and a coating layer formed on at least one surface of the substrate, wherein the coating layer includes a cured resin of the cationically curable monomer; and a cured resin of the radically curable monomer.

In addition, the present invention provides a polarizing plate including: a polarizer; an adhesive layer; and a polarizer protective film.

The resin composition for a polarizer protective film of the present invention has excellent curl properties, surface hardness, film strength, coating workability and crack resistance, and a protective film prepared by using the same exhibits high strength, high hardness, scratch resistance and high transparency, and also occurs fewer curls or cracks, and thus it can be usefully applied for a polarizer protective film.

In particular, the structure of a conventional polarizing plate has required a protection film on the upper and lower two surfaces of the polarizer in order to ensure a constant hardness and modulus. However, according to the polarizing plate of the present invention, even if the lower protective film is omitted, it is possible to ensure the hardness and modulus equivalent to or higher than those of a conventional polarizing plate. That is, even if the polarizer protective film of the present invention is applied only to the upper portion of the polarizer, it is possible to omit the lower protective film having a large phase retardation value without decreasing the overall hardness and modulus.

Therefore, a low retardation plate having a low phase retardation value due to the omission of the lower protective film can be provided, and a more vivid image quality can be realized. Thus, it can be used, without restriction, in the display device which requires a low phase retardation value.

In addition, the polarizing plate having a structure in which the lower protective film is omitted can exhibit high hardness even while lowering the overall thickness, and thus thinning is possible.

### BRIEF DESCRIPTION OF THE DRAWINGS

FIG. 1 is a view illustrating a structure of a conventional general polarizing plate.
FIG. 2 is a view illustrating a structure of a polarizing plate according to an embodiment of the present invention.

### DETAILED DESCRIPTION OF THE EMBODIMENTS

The resin composition of the present invention comprises: a cationically curable monomer; a cationic photopolymerization initiator; a radically curable monomer; and a radical photopolymerization initiator.

The polarizer protective film of the present invention includes a substrate; and a coating layer formed on at least one surface of the substrate, wherein the coating layer includes a cured resin of the cationically curable monomer; and a cured resin of the radically curable monomer.

The polarizing plate of the present invention includes a polarizer; an adhesive layer; and the polarizer protective film.

The present invention may be variously modified and realized in various forms, and thus specific embodiments will be exemplified and described in detail below. However, the present invention is not limited to a specific disclosed form, and needs to be understood to include all modifications, equivalents, or replacements included in the spirit and technical range of the present invention.

As used herein, the term "upper surface" means a surface arranged so as to face the polarizing plate to a viewer when attached to the device. In addition, the "upper" means a direction in which the polarizing plate faces toward a viewer when attached to the device. Conversely, "lower surface" or "lower portion" means a surface or direction arranged so as to face the polarizing plate to the opposite side of a viewer when attached to the device.

Hereinafter, the resin composition for a polarizer protective film, the polarizer protective film, and the polarizing plate comprising the same according to the present invention will be described in more detail.

The resin composition according to one aspect of the present invention comprises: a cationically curable monomer; a cationic photopolymerization initiator; a radically curable monomer; and a radical photopolymerization initiator.

The resin composition of the present invention is a coating composition used to form the polarizer protective film that is used to protect the polarizer from the outside.

As the polarizer protective film that is commonly used in the art, a substrate consisting of polyester such as polyethylene terephthalate (PET), cyclic olefin copolymer (COC), polyacrylate (PAC), polycarbonate (PC), polyethylene (PE), polymethyl methacrylate (PMMA), polyetheretherketone (PEEK), polyethylenenaphthalate (PEN), polyetherimide (PEI), polyimide (PI) or triacetylcellulose (TAC) can be exemplified.

Among these substrates, particularly triacetyl cellulose (TAC) film is widely used because it is excellent in optical properties. However, the TAC film, when used alone, exhibits weak surface hardness and is susceptible to humidity. Therefore, it is necessary to add a functional coating layer, such as a hard coating using an ultraviolet curable resin. As a method of improving the surface hardness of the coating method, a method of increasing the thickness of the hard coating layer can be considered. By the way, in order to ensure a constant surface hardness, it is necessary to increase the thickness of the coating layer, but as the thickness of the coating layer increases, the surface hardness can more increase while curls are occurred due to cure shrinkage and at the same time the coating layer is easily cracked or peeled and thus its practical application is not easy.

In particular, such cure shrinkage becomes a problem during the curing of acrylate-based binder. The acrylate-based binder commonly used as a ultraviolet-curable resin exhibits a high film strength after curing and thus is used for the purpose of forming a coating layer of high hardness. However, as a double bond of the acrylate-based binder is cross-linked and cured, the cross-linking distance is short and the cure shrinkage occurs, which may lead to a phenomenon where the adhesiveness with the substrate is lowered or curls or cracks are generated in the coating layer.

Thus, the present invention provides a protective film which can have a low cure shrinkage while having sufficient film strength and surface hardness, and thus does not cause the problems of curling or cracking, and a resin composition used for the preparation thereof, a polarizer protective film and a polarizing plate including the protective film. Further, the protective film of the present invention can exhibit excellent optical properties required for the polarizer protective film.

In addition, the polarizing plate of the present invention exhibits high modulus and hardness, and thus in order to realize a clear image quality, it can be applied to a structure of the polarizing plate wherein the lower protective film of the polarizer is omitted and the protective film of the present invention is provided only to the upper portion of the polarizer. That is, when applying the polarizer protective film of the present invention to a polarizing plate, it is possible to omit the lower protective film of the polarizer which has been essentially included in the prior art in order to ensure a constant modulus. Therefore, it is possible to provide a low retardation polarizing plate and display which are made thin without decreasing the overall strength of the polarizing plate and have a low phase retardation value.

The resin composition of the present invention for achieving the properties as described above includes a cationically curable monomer, a cationic photopolymerization initiator, a radically curable monomer and a radical photopolymerization initiator.

The cationically curable monomer refers to a monomer that is subjected to a cure initiation by cations generated from a cationic photopolymerization initiator due to the ultraviolet irradiation. For example, it may be a monomer containing a functional group such as an epoxy group, an oxetane group, a vinyl ether group, or a siloxane group. According to one embodiment of the present invention, the cationically curable monomer may be a compound containing at least one or more epoxy groups.

According to one embodiment of the invention, the cationically curable monomer has one or more cationic curable functional groups in the molecule, and preferably it can contain two or more cationic curable functional groups in the molecule.

In addition, it may be desirable to further include one or more cycloalkyl groups in the molecule. When using a cationically curable monomer having a structure including a cycloalkyl group in the molecule as described above, a certain distance between the molecules is ensured even after curing due to the void occupied by the cycloalkyl group, thereby reducing a cure shrinkage of the coating layer. Accordingly, it is possible to improve the curl property of the coating layer caused by the cure shrinkage of the radically curable monomers such as an acrylate-based binder. The cycloalkyl group may include one ring compound or two or more ring compounds. The two or more ring compounds can be simply linked to each other, or may be linked by other linking group. Alternatively, two or more rings can be present in a fused form that shares one or more carbon atoms. Further, the cycloalkyl group may include, for example, a compound having 3 to 90 carbon atoms, but is not limited thereto.

The cationically curable monomer containing a cycloalkyl group as described above forms a crosslinked structure that is subjected to a cure initiation by cations generated from a cationic photopolymerization initiator, and the formed crosslinked structure is excellent in flexibility and elasticity. Therefore, the protective film formed by using the resin composition including the same can ensure high elasticity or flexibility while ensuring mechanical and physical properties, and further have a good coating workability and minimize the potential for curling and cracking.

The cationically curable monomer can be used alone or in combination with other two or more types.

According to one embodiment of the present invention, the weight average molecular weight of the cationically curable monomer may range, for example, from about 1,000 to about 1,500 g/mol, but is not particularly limited thereto. If the weight average molecular weight is too large, the compatibility of the protective film to be produced may be decreased or the film strength of the coating film can be reduced. In this respect, the weight average molecular weight of the cationically curable monomer is preferably less than about 1,500 g/mol.

According to one embodiment of the present invention, the cationically curable monomer can be included in an amount of about 20 to about 90 parts by weight, or about 30 to about 85 parts by weight, or about 40 to about 85 parts by weight, based on 100 parts by weight in total of the resin composition. From the viewpoint of the sufficient implementation of the mechanical and physical properties including the film strength of the coating layer and the coating workability, the above-mentioned parts by weight range is preferred.

The resin composition of the present invention comprises a cationic photopolymerization initiator that is subjected to a cure initiation of the cationically curable monomer by producing a cation by the ultraviolet irradiation.

The cationic photopolymerization initiator may include, for example, an onium salt, an organometallic salt or the like, but the present invention is not limited thereto. Specifically, the cationic photopolymerization initiator can include, for example, a diaryliodonium salt, a triarylsulfonium salt, an aryldiazonium salt, an iron-arene complex and the like. More specifically, the cationic photopolymerization initiator may include one or more selected from the group consisting of an aryl sulfonium hexafluoroantimonate salt, an aryl sulfonium hexafluorophosphate salt, a diphenyliodonium hexafluorophosphate salt, a diphenyliodonium hexafluoroantimonate salt, a ditolyliodonium hexafluorophosphate salt, a 9-(4-hydroxyethoxyphenyl)thianthrenium hexafluorophosphate salt and the like, but may not be limited thereto.

According to one embodiment of the invention, the cationic photopolymerization initiator can be contained in an amount of about 0.01 to about 5 parts by weight, or about 0.1 to about 1 part by weight, based on 100 parts by weight in total of the resin composition. When the cationic photopolymerization initiator is contained within the above-described range, the cation-initiated photopolymerization can be performed without deteriorating the physical properties of the composition.

The resin composition of the present invention includes, as a binder, a radically curable monomer and a radical photopolymerization initiator for performing a cure initiation of the radically curable monomer in addition to the cationically curable monomer.

The radically curable monomer refers to a monomer that is subjected to a cure initiation by free radicals generated from a radical photopolymerization initiator due to the ultraviolet irradiation.

According to one embodiment of the present invention, the radically curable monomer may be a multifunctional acrylate-based monomer.

The multifunctional acrylate-based monomer may refer to a monomer which includes two or more, for example, two to six acrylate-based functional groups and has a molecular weight of less than 1,000g/mol. More specifically, the multifunctional acrylate-based monomer may include, for example, hexanediol diacrylate (HDDA), tripropylene glycol diacrylate (TPGDA), ethylene glycol diacrylate (EGDA), trimethylolpropane triacrylate (TMPTA), trimethylolpropane ethoxy triacrylate (TMPEOTA), glycerol propoxylated triacrylate (GPTA), pentaerythritol tri(tetra)acrylate (PETA), or dipentaerythritol hexaacrylate (DPHA) or the like, but the present invention this is not limited thereto. The multifunctional acrylate-based monomer, together with the above-described cationically curable-based monomer, serves to further impart a certain pencil hardness and abrasion resistance to the protective film.

According to one embodiment of the present invention, the radically curable monomer can be contained in an amount of about 5 to about 70 parts by weight, or about 10 to about 60 parts by weight, or about 15 to about 50 parts by weight, based on 100 parts by weight in total of the resin composition. When the content of the radically curable monomer is too larger than the above-described range, curls may occur due to a cure shrinkage, and when the content of the radically curable monomer is too low, it is likely that the effects of improving mechanical and physical properties of the protective film is not sufficient.

According to one embodiment of the present invention, in the resin composition of the present invention, the weight ratio of the cationically curable monomer and the radically curable monomer may be about 2:8 to about 9:1, preferably about 3:7 to about 9:1, more preferably from about 4:6 to about 9:1. When the cationically curable monomer and the radically curable monomer are included within the above weight ratio range, the protective film of the present invention may have a film strength improving effect and a good curl property without deteriorating other mechanical and physical properties. In particular, the protective film obtained by using a resin composition wherein the weight ratio of the cationically curable monomer and the radically curable monomer is about 4:6 to about 9:1 enables well-balanced improvement among curl properties and hardness and thus can exhibit optimized properties.

The coating composition of the present invention also includes a radical photopolymerization initiator that is subjected to a cure initiation of the radically curable monomer by producing a radical due to the ultraviolet irradiation.

The radical photopolymerization initiator may include 1-hydroxy-cyclohexyl-phenyl ketone, 2-hydroxy-2-methyl-1-phenyl-1-propanone, 2-hydroxy-1-[4-(2-hydroxy-hydroxyethoxy)phenyl]-2-methyl-1-propanone, methyl benzoylformate, α,α-dimethoxy-α-phenyl acetophenone, 2-benzoyl-2-(dimethylamino)-1-[4-(4- morpholinyl)phenyl]-1-butanone, 2-methyl-1-[4-(methylthio) phenyl]-2-(4-morpholinyl)-1-propanone, diphenyl(2,4,6-trimethylbenzoyl)-phosphine oxide or bis(2,4,6-trimethylbenzoyl)-phenyl phosphineoxide, but is not limited thereto. In addition, the commercially available products thereof include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F etc. These radical photopolymerization initiators may be used alone or in combination with other two or more types.

According to one embodiment of the present invention, the radical photopolymerization initiator can be contained in an amount of about 0.01 to about 5 parts by weight, or about 0.1 to about 1 parts by weight, based on 100 parts by weight in total of the coating composition. When the radical photopolymerization initiator is included within the above range, effective photopolymerization can be performed without deteriorating the physical properties of the composition.

According to one embodiment of the present invention, the resin composition may further include an inorganic fine particle in order to enhance the surface hardness of the protective film. The inorganic particle can be included in the resin composition in a form dispersed in the cationically curable monomer, the radically curable monomer, a solvent or the like.

The inorganic fine particle having a nanoscale diameter, for example, nano particles with a particle dimeter of about 100 nm or below, or about 10 to about 100 nm, or about 10 to about 50 nm may be used. In addition, the inorganic fine particle includes, for example, fine particles of silica, aluminum oxide particles, titanium oxide particles or zinc oxide particles, etc.

By including the inorganic particle, the hardness of the protective film can be further enhanced.

According to one embodiment of the invention, the inorganic fine particle may be included in an amount of about 10 to about 80 parts by weight or about 20 to about 70 parts by weight based on 100 parts by weight in total of the resin composition. When the inorganic fine particles are included within the above range, it is possible to from a protective film which has both high hardness and excellent curl property.

The resin composition of the present invention can achieve a uniform mixing of the respective components and a proper viscosity and thus can be used in solvent-free form that does not contain a solvent if there is no problem in the coating process.

On the other hand, the resin compositions of the present invention may further include an organic solvent for uniform mixing and coating properties of the respective components.

The organic solvent may be used along or in combination which includes alcohol-based solvents such as methanol, ethanol, isopropyl alcohol, butanol; alkoxy alcohol-based solvents such as 2-methoxyethanol, 2-ethoxyethanol, 1-methoxy-2-propanol; ketone-based solvents such as acetone, methyl ethyl ketone, methyl isobutyl ketone, methyl propyl ketone, cyclohexanone; ether-based solvents such as propylene glycol monopropyl ether, propylene glycol monomethyl ether, ethylene glycol monoethyl ether, ethylene glycol monopropyl ether, ethylene glycol monobutyl ether, diethylene glycol monomethyl ether, diethyl glycol monoethyl ether, diethyl glycol monopropyl ether, diethyl glycol monobutyl ether, diethylene glycol-2-ethyl hexyl ether, and aromatic solvents such as benzene, toluene, xylene, etc.

According to one embodiment of the invention, the content of the organic solvent may be variously adjusted within the range which does not degrade the physical properties of the resin composition, and thus is not particularly limited.

On the other hand, in addition to the cationically curable monomer, the radically curable monomer, or the cationic photopolymerization initiator, the inorganic fine particle and the organic solvent as described above, the resin composition of the present invention may further include additives commonly used in the technical field to which the prevent invention pertains, such as a UV absorber, a surfactant, an anti-yellowing agent, a leveling agent, an antifouling agent, etc. Further, the contents thereof may be variously adjusted within the range which does not degrade the physical properties of the protective film of the present invention, and thus are not particularly limited.

According to one embodiment of the present invention, the resin composition may include, for example, a surfactant as an additive, and the surfactant may be a fluorine-based acrylate of mono- or bi-functional fluorine-based acrylate, a fluorine-based surfactant or a silicon-based surfactant.

In addition, the anti-yellowing agent may be included as the additives, and the anti-yellowing agent may include a benzophenone-based compound or a benzotriazole-based compound.

As described above, the polarizer protective film can be formed by photocuring the resin composition of the present invention comprising: a cationically curable monomer; a radically curable monomer; a cationic photopolymerization initiator; and optionally, an inorganic fine particle, an organic solvent and other additives.

According to another aspect of the invention, there is provided a polarizer protective film including: a substrate; and a coating layer formed on at least one surface of the substrate, wherein the coating layer includes a cured resin of a cationically curable monomer; and a cured resin of a radically curable monomer.

In the polarizer protective film of the present invention, the coating layer includes a cured resin of the cationically curable monomer; and a cured resin of the radically curable monomer.

The protective film of the present invention can ensure high strength, high hardness and excellent curl properties without decreasing the optical properties by including a cured resin of the cationically curable monomer and a cured resin of the radically curable monomer at the same time. Accordingly, when applying the polarizer protective film of the present invention to a polarizing plate, the lower protective film of the polarizer which has been essentially included in the prior art in order to ensure a film strength of a certain level or more can be omitted, and even if the protective film of the present invention is applied only to the upper portion of the polarizer, the film strength is not lowered and thus thinning, high hardness, high strength, low phase retardation and a more vivid image quality can be achieved and further it can be used in the display device that requires a low phase retardation value.

Further, according to one embodiment of the present invention, depending on the cross-linked forms of each binder of the cationically curable monomer and the radically curable monomer, said coating layer may include a cured resin of the cationically curable monomer, a cured resin of the cationically curable monomer and the radically curable monomer, a cured resin of the radically curable monomer, or a mixture thereof.

According to one embodiment of the present invention, the weight ratio of the cured resin of the cationically curable resin and the cured resin of the radically curable monomer may be from about 2:8 to about 9:1, preferably from about 3:7 to from about 9:1, more preferably from about 4:6 to about 9:1. When the two components are cured within the above-mentioned weight ratio range, the protective film of the present invention can have a sufficient curl properties without deterioration of the mechanical properties. In particular, when the coating layer includes a cured resin of the cationically curable monomer and a cured resin of the radically curable monomer in the range from about 4:6 to about 9:1, curls are not substantially occur and thereby it can exhibit very excellent curl properties.

According to one embodiment of the present invention, the coating layer can further include an inorganic fine particle. The inorganic fine particle can be included in the form of being dispersed in the cured resin.

The fine particle having a nanoscale diameter, for example, nano particles with a particle dimeter of about 100 nm or below, or about 10 to about 100 nm, or about 10 to about 50 nm may be used. In addition, the inorganic fine particles include, for example, fine particles of silica, aluminum oxide particles, titanium oxide particles or zinc oxide particles, etc.

By including the inorganic fine particles, it is possible to further improve the hardness of the protective film.

According to one embodiment of the present invention, the inorganic fine particles can be included in an amount of about 10 to about 80 parts by weight, or about 20 to about 70 parts by weight, based on 100 parts by weight in total of the coating layer. By including the inorganic fine particles within the above range, it is possible to provide a protective film which is excellent in both the hardness and the curl properties.

According to one embodiment of the present invention, the coating layer can have a thickness of about 2 µm or more, for example, about 2 to about 50 µm, or about 5 to about 40 µm, or about 10 to about 30 µm, or about 20 to about 30 µm, the range of which satisfies both the sufficient film strength and curl properties. In particular, the coating layer of the present invention can exhibit excellent curl property even when coating a thick film with a thickness of 20 µm or more by including a cured resin of the cationically curable monomer and a cured resin of the radically curable monomer at the same time.

In addition, the protective film of the present invention can have a thickness of about 30 µm or more, for example, about 30 to about 100 µm, or about 30 to about 70 µm, or about 35 to about 60 µm.

The polarizer protective film of the present invention can be formed by coating the resin composition comprising: a cationically curable monomer, a cationic photopolymerization initiator, a radically curable monomer, a radical photopolymerization initiator, and optionally, an inorganic fine particle, an organic solvent and other additives, as described above, on a substrate and subjecting the coated product to a photocuring.

More specifically, the above-described resin composition is coated onto one surface or two surfaces of the substrate and the coated resin composition can be subjected to a photocuring to produce the polarizer protective film of the present invention.

Specific description of each component is as described above in the resin composition.

The above substrate can be used without limitation as long as it can be used in the technical field to which the s invention pertains. According to one embodiment of the present invention, the substrate may be, for example, a film including polyester such as polyethylene terephthalate (PET), polyethylene such as ethylene vinyl acetate(EVA), cyclic olefin polymer (COP), cyclic olefin copolymer (COC), polyacrylate (PAC), polycarbonate (PC), polyethylene (PE), polymethylmethacrylate (PMMA), polyetheretherketone (PEEK), polyethylenenaphthalate (PEN), polyetherimide (PEI), polyimide (PI), triacetylcellulose (TAC), MMA (methyl methacrylate), or a fluorine-based resin, or the like. Preferably, a TAC film may be used.

The substrate may be in a single-layer structure or a multi-layer structure including at least two substrates composed of the same or different materials, as needed, but is not limited thereto.

The thickness of the substrate is not particularly limited, but a film having a thickness of about 20 to about 200 µm, or about 20 to about 100 µm, or about 20 to about 50 µm may be mainly used. In particular, the protective film of the present invention can, due to high strength properties of the coating layer, exhibit a high strength and modulus as a whole even by using the thin-film substrate having a thickness of 50 µm or less.

The method for coating the resin composition is not particularly limited as long as it can be used in the technical field to which the present invention pertains, for example, a bar coating method, a knife coating method, a roll coating method, a blade coating method, a die coating method, a microgravure coating method, a comma coating method, a slot die coating method, a lip coating method, or a solution casting method, etc. may be used.

Next, the protective film can be formed by irradiating the ultraviolet rays to the coated resin composition and performing a photocuring reaction. Before irradiating the ultraviolet rays, it is possible to further perform the step of drying in order to planarize the coated surface of the resin composition and volatilize a solvent contained in the composition.

The ultraviolet dose may be, for example, about 20 to about 600 mJ/cm². A light source of the ultraviolet irradiation is not particularly limited as long as it can be used in the technical field to which the present invention pertains, for example, a high-pressure mercury lamp, a metal halide lamp, a black light fluorescent lamp, etc. may be used.

The protective film of the present invention exhibits high strength, high hardness, excellent curl properties, scratch resistance, high transparency, and excellent optical properties and thus can be used as a polarizer protective film and can be usefully applied in a variety of polarizing plates.

In the present invention, the coating layer can be formed on only one surface of the substrate or it can be formed on both surfaces of the substrate.

According to another aspect of the present invention, there is provided a polarizing plate which includes the polarizer; an adhesive layer; and the polarizer protective film.

The above protective film includes the substrate; and a coating layer formed on at least one surface of the substrate, wherein the coating layer includes a cured resin of a cationically curable monomer; and a cured resin of a radically curable monomer, and a more specific description is the same as described above in the polarizer protective film.

The polarizer shows characteristics that can extract only the light vibrating in one direction from the incident light entering while vibrating in various directions. These characteristics can be achieved by stretching a PVA (poly vinyl alcohol which has absorbed iodine with a strong tension. For example, more specifically, the polarizer can be formed by performing a swelling step of immersing a PVA film in an aqueous solution and swelling it; a step of staining the swelled PVA film with a dichroic material which imparts polarization properties; a stretching step of stretching the stained PVA film and arranging the dichroic dye material side by side in the stretching direction; and a complementary color step of correcting a color of the PVA film that has undergone the stretching step. However, the polarizing plate of the present invention is not intended to be limited thereto.

The polarizing plate of the present invention includes a protective film formed on at least one surface of the polarizer.

The polarizing plate of the present invention includes an adhesive layer between the polarizer and the polarizer protective film.

The adhesive layer may be one that includes an adhesive agent for a polarizer capable of maintaining the polarization characteristic of the polarizer together with transparency. The adhesive agent usable herein is not particularly limited as long as it is known in the art. For example, a one-component type or a two-component type polyvinyl alcohol(PVA)-based adhesive agent, acryl-based adhesive agent, polyurethane-based adhesive agent, epoxy-based adhesive agent, styrene-butadiene rubber(SBR)-based adhesive agent, or a hot melt type adhesive agent, or the like may be used; however, the adhesive agent is not limited thereto.

The thickness of the adhesive layer may be from about 0.1 to about 10 µm, or from about 0.1 to about 5 µm, but the present invention is not limited thereto.

The polarizing plate of the present invention can be obtained by laminating and adhering the polarizer protective film to the polarizer using the adhesive agent.

According to one embodiment of the invention, the protective film may be attached to the two surfaces of the polarizer.

According to another embodiment of the invention, the protective film is attached only to one surface of a polarizer, and a conventional general-purpose protective film such as TAC can be attached to the other surface of the polarizer.

Alternatively, the protective film of the present invention is attached only to one surface of the polarizer, and it is possible to omit the protective film in the other surface. That is, the polarizing plate according to an embodiment of the present invention includes a polarizer, an adhesive layer formed on an upper portion of the polarizer, and a polarizer protective film that is provided on an upper portion of the adhesive layer, and the lower surface of the polarizer cannot include a polarizer protective film.

As described above, although the lower protective film of the polarizer is omitted and the protective film of the present invention is applied only to the upper portion of the polarizer, the film strength is not reduced and thus thinning is possible. Also, although a conventional lower protective film that generates a phase retardation value is omitted, the film strength or the modulus is not reduced and thus, a high strength polarizing plate having low phase retardation value can be provided. Thus, a more vivid image quality can be achieved, and it can be used in a display device that requires low retardation value.

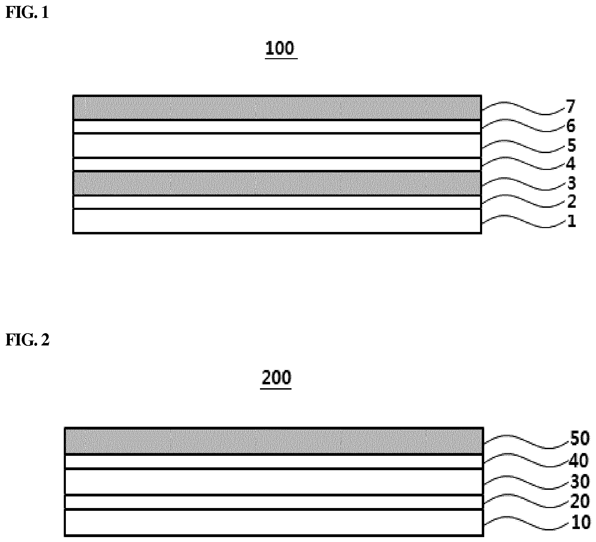

FIG. 1 is a view illustrating a structure of a conventional general polarizing plate, and FIG. 2 is a view illustrating a structure of a polarizing plate according to an embodiment of the present invention.

Referring to FIG. 1, a conventional general polarizing plate 100 has a structure in which a upper protective film 7 and a lower protective film 3 are laminated around a polarizer 5 in order to protect a polarizer 5 via adhesive layers 6,4 of the upper and lower surfaces of the polarizer 5. The lower surface of the lower protective film 3 is provided with a pressure-sensitive adhesive layer 2 for adhering a polarizing plate 100 to an adherend such as another layer or film and it can be further provided with a release film 1 for protecting with a pressure-sensitive adhesive layer 2. The release film 1 is peeled off later.

In comparison, the structure of the polarizing plate according to an embodiment of the present invention is shown in FIG. 2.

Referring to FIG. 2, the polarizing plate 200 according to one embodiment of the present invention can include only an upper protective film 50 via an adhesive layer 40 of the upper surface of the polarizer 30 as a protective film for protecting the polarizer 30, and it can have a structure in which the lower adhesive layer and the lower protective film as shown in FIG. 1 are omitted. Therefore, in the lower surface of the polarizer 30, a pressure-sensitive adhesive layer 20 for adhering a polarizing plate 200 without a lower protective film and a release film 10 for protecting the pressure-sensitive adhesive layer 20 can be provided.

In the structure of a conventional polarizing plate as shown in FIG. 1, in order to complement the low modulus of the pressure-sensitive adhesive layer 2, i.e., in order to improve the pressing phenomenon of the polarizing plate caused by the pressure-sensitive adhesive layer having a low modulus, the lower protective film is essential. Further, it may be necessary to form a hard coating layer for the upper protective film. As a method of increasing the strength of the coating layer, a method of improving the thickness of the coating layer can be considered. However, in order to ensure high film strength, it is necessary to increase the thickness of the coating layer. However, as the thickness of the coating layer increases, the strength may more increase, but there is a problem that wrinkling or curling becomes larger by cure shrinkage and at the same time cracking and peeling of the coating layer is liable to occur. In particular, this cure shrinkage is problematic in acrylate-based binder frequently used as an ultraviolet-curing resin. The acrylate-based binder exhibits high film strength after curing and thus is used for the purpose of forming a coating layer having high hardness, but cure shrinkage phenomenon occurs whereby an adhesiveness with the substrate is lowered, or curls or cracks are generated in the coating layer. Further, when including the lower protective film in the polarizer, there is a drawback that the overall thickness of the polarizer is increased and it may be disadvantageous for thinning and the phase retardation value increases.

However, the polarizing plate according to one embodiment of the present invention has a low cure shrinkage while having sufficient hardness and thus is provided with a protective film without curl or crack problems. Although such protective film is applied to the polarizer on only upper side and a lower protective film is omitted, it is possible to prevent the pressing phenomenon due to the pressure-sensitive adhesive layer and to exhibit high hardness and high modulus.

As such, the polarizer protective film of the present invention and the polarizer including the same exhibit high hardness and low retardation characteristics, and thus can be used without limitation in various display devices.

For example, according to one embodiment of the invention, when the polarizer protective film of the present invention is located in plane after cutting into a size of 10cmx10cm and storing for 24 hours, the average value of distance at which or one side of each edge is spaced apart from a plane may be 50mm or less, or 30mm or less, or about 20mm or less.

Further, the polarizer protective film of the present invention may have a pencil hardness of H or higher, 3H or more, or 4H or more as measured under a load of 500g in accordance with ASTM D3363.

Further, the polarizer protective film of the present invention may have a light transmittance of 90% or more, or 91% or more, and a haze of 2% or less, or 1% or less, or 0.5% or less.

Further, the polarizing plate according to one embodiment of the present invention can exhibit a modulus of about 4 GPa or more, or about 5 GPa or more, or about 6 GPa or more; and about 9 GPa or less, or about 8 GPa or less, or about 7 GPa or less as measured by Nano-indentation method.

Further, the polarizing plate according to an embodiment of the present invention can exhibit a hardness of about 0.4 GPa or more, or about 0.5 GPa or more, or about 0.6 GPa or more; and about 1.0 GPa or less, or about 0.9 GPa or less, or about 0.8 GPa or more, as measured by Nano-indentation method.

The polarizer protective film of the present invention and the polarizing plate including the same can be utilized in various fields. For example, it can be used for a mobile communication terminal, a smartphone, other mobile devices, display devices, electronic blackboard, outdoor display boards, and various types of display units. According to one embodiment of the present invention, the polarizing plate can be a polarizing plate for TN (Twisted Nematic), STN (Super Twisted Nematic) liquid crystal, or it may be a polarizing plate for horizontal alignment mode such as IPS (In-Plane Switching), Super-IPS, FFS (Fringe Field Switching), or it may be a polarizing plate for a vertical alignment mode.

Hereinafter, operations and effects of the present invention will be described in more detail with reference to specific examples. However, these examples are provided for illustrative purposes only, and the scope of the invention should not be limited thereto in any manner.

### <Examples>

### Preparation of Protective Film and Polarizing Film

### Example 1

6 g of Celloxide 8000 (manufactured by Daicel) as a cationically curable monomer, 6 g of pentaerythritol tri(tetra) acrylate (PETA) as a radically curable monomer, 0.05 g of a cationic photopolymerization initiator (trade name UVI-6976, manufactured by Dow Chemical), 0.1 g of a radical photopolymerization initiator (trade name Irgacure 184) and 10 g of MEK were mixed to prepare a resin composition.

The resin composition was coated onto one surface of TAC film having a thickness of 25 µm. After drying at 60°C for 2 minutes, the coating was irradiated with about 200 mJ/cm² under a metal halide lamp to obtain a protective film. After the completion of curing, the thickness of the coating layer was 20 µm.

The protective film was adhered by laminating with PVA film using an acryl-based adhesive agent so that a thickness of the adhesive layer was about 2 µm.

The other surface of the PVA film was laminated using a pressure-sensitive adhesive film having a thickness of 12 µm to a glass without the protective film.

### Example 2

6 g of Celloxide 8000 (manufactured by Daicel) as a cationically curable monomer, 6 g of pentaerythritol tri(tetra) acrylate (PETA) as a radically curable monomer, 0.05 g of a cationic photopolymerization initiator (trade name UVI-6976, manufactured by Dow Chemical), 0.1 g of a radical photopolymerization initiator (trade name Irgacure 184), 30 g of a surface-modified colloidal silica MEK-AC-2140Z (manufactured by Nissan Chemical, solid content 30%) and 5 g of MEK were mixed to prepare a resin composition.

The remaining steps were performed in the same manner as in Example 1 to prepare a protective film and a polarizing plate.

### Example 3

5 g of Celloxide 8000 (manufactured by Daicel) as a cationically curable monomer, 7 g of pentaerythritol tri(tetra) acrylate (PETA) as a radically curable monomer, 0.05 g of a cationic photopolymerization initiator (trade name UVI-6976, manufactured by Dow Chemical), 0.1 g of a radical photopolymerization initiator (trade name Irgacure 184), 30 g of a surface-modified colloidal silica MEK-AC-2140Z (manufactured by Nissan Chemical, solid content 30%) and 5 g of MEK were mixed to prepare a resin composition.

The remaining steps were performed in the same manner as in Example 1 to prepare a protective film and a polarizing plate.

### Example 4

10 g of Celloxide 8000 (manufactured by Daicel) as a cationically curable monomer, 2 g of pentaerythritol tri(tetra) acrylate (PETA) as a radically curable monomer, 0.05 g of a cationic photopolymerization initiator (trade name UVI-6976, manufactured by Dow Chemical), 0.1 g of a radical photopolymerization initiator (trade name Irgacure 184), 30 g of a surface-modified colloidal silica MEK-AC-2140Z (manufactured by Nissan Chemical, solid content 30%) and 5 g of MEK were mixed to prepare a resin composition.

The remaining steps were performed in the same manner as in Example 1 to prepare a protective film and a polarizing plate.

### Comparative Example 1

10 g of pentaerythritol tri(tetra) acrylate (PETA) as a radically curable monomer, 0.1 g of a radical photopolymerization initiator (trade name Irgacure 184), and 5 g of MEK were mixed to prepare a resin composition

The remaining steps were performed in the same manner as in Example 1 to prepare a protective film and a polarizing plate.

### Comparative Example 2

The protective film was prepared in the same manner as in Comparative Example 1, except that 30 g of a surface-modified colloidal silica MEK-AC-2140Z (manufactured by Nissan Chemical, solid content 30%) was further mixed in the resin composition of Comparative Example 1.

The remaining steps were performed in the same manner as in Example 1 to prepare a protective film and a polarizing plate.

### Comparative Example 3

12 g of Celloxide 8000 (manufactured by Daicel) as a cationically curable monomer, 0.05 g of a cationic photopolymerization initiator (trade name UVI-6976, manufactured by Dow Chemical), and 5 g of MEK were mixed to prepare a resin composition.

The remaining steps were performed in the same manner as in Example 1 to prepare a protective film and a polarizing plate.

### <Experimental Example>

### <Measurement method>

The physical properties of the polarizer protective film and the polarizer of Examples and Comparative Examples were measured by the following method.

### 1) Transmittance

The transmittance and haze were measured by using a Haze meter(HM150).

### 2) Pencil hardness

The surface of the coating layer of the polarizer protective film was scratched once using a pencil hardness tester under a load of 500 g according to the measurement standard of ASTM D3363, and it was confirmed that no starches were found in the hardness.

### 3) Scratch Resistance

A constant load was applied to Steel wool #0000, and the surface of the coating layer of the polarizer protective film was scratched reciprocatively ten times, and it was confirmed that no starches were found in the load.

### 4) Curl property

When polarizer protective film was located on a plane after cut into a size of 10cmx10cm and stored for 24 hours, the average value of distance at which one side of each edge was spaced apart from a plane was measured. When curls were generated in the direction of the coated surface, the value was indicated by +, and when curls were generated in the opposite direction, the value was indicated by -. In addition, when the protective film was rolled and the distance spaced apart from the plane could not be measured, it was indicated by NG.

### 5) Hardness and Modulus

The hardness and modulus were measured by the following method.

Fist, the respective polarizer protective films of Examples and Comparative Examples were adhered by laminating on one surface of PVA film using an acryl-based adhesive agent so that the thickness of the adhesive layer was approximately 2 *µ*m. The other surface of the PVA film was laminated using a pressure-sensitive adhesive film having a thickness of 12 µm to a glass without the protective film. The polarizing plate in a state where the pressure-sensitive adhesive film was attached was measured using Nanoindenter XP devices of MTS under the following conditions.

Poissons Ratio (0.18), Surface Approach Velocity (10 nm/s), Depth Limit (1000 nm), Delta X For Finding Surface (-50 µm), Delta Y For Finding Surface (-50 µm), Strain Rate Target (0.05/s), Allowable Drift Rate (0.3 nm/s), Harmonic Displacement Target (2 nm), Approach Distance to store (1000 nm), Frequency Target (45 Hz), Surface Approach Distance (1000 nm), Surface Approach Sensitivity (20%)

The measurement results of the physical properties are shown in Tables 1 and 2 below.

**[Table 1]**

| | Example 1 | Example 2 | Example 3 | Example 4 |
|---|---|---|---|---|
| Transmittance | 91.3% | 91.5% | 91.5% | 91.4% |
| Haze | 0.3% | 0.4% | 0.3% | 0.3% |
| Pencil hardness | 4H | 4H | 3H | 4H |
| Scratch resistance | 500g | 300g | 400g | 300g |
| Curl property | +15mm | +5mm | -2mm | -5mm |
| Hardness (GPa) | 0.466 | 0.650 | 0.569 | 0.563 |
| Modulus (GPa) | 4.21 | 6.47 | 5.905 | 5.86 |

**[Table 2]**

| | Comparative Example 1 | Comparative Example 2 | Comparative Example 3 |
|---|---|---|---|
| Transmittance | 91.4% | 91.7% | 91.3% |
| Haze | 0.3% | 0.3% | 0.3% |
| Pencil hardness | 4H | 4H | 2H |
| Scratch resistance | 500g | 400g | 200g |
| Curl property | NG | NG | -10mm |
| Hardness (GPa) | 0.398 | 0.480 | 0.353 |
| Modulus (GPa) | 3.45 | 4.74 | 2.906 |

As shown in Table 1, the protective films according to Examples of the present invention exhibited a pencil hardness of 3H to 4H and also excellent curl property when evaluated by a method of measuring the distance spaced apart from the plane for the protective film. In addition, it exhibited high hardness and modulus.

On the other hand, looking at Table 2, in the case of Comparative Examples 1 and 2, the film showed a phenomenon where it was rolled in a cylindrical shape due to a cure shrinkage and thus curl property was very poor. In the case of Comparative Example 3, the curl property was relatively excellent, but the other physical properties such as pencil hardness, hardness, modulus and scratch resistance were poor.

## Claims

1. A resin composition comprising: a cationically curable monomer; a cationic photopolymerization initiator; a radically curable monomer; and a radical photopolymerization initiator.

2. The resin composition according to claim 1, wherein the cationically curable monomer is included in an amount of 20 to 90 parts by weight, the cationic photopolymerization initiator in an amount of 0.01 to 5 parts by weight, the radically curable monomer in an amount of 5 to 70 parts by weight, and the radical photopolymerization initiator in an amount of 0.01 to 5 parts by weight, based on 100 parts by weight in total of the resin composition.

3. The resin composition according to claim 1, wherein the cationically curable monomer includes a functional group selected from the group consisting of an epoxy group, an oxetane group, a vinyl ether group, and a siloxane group.

4. The resin composition according to claim 3, wherein the cationically curable monomer contains one or more epoxy groups in the molecular.

5. The resin composition according to claim 1, wherein the cationically curable monomer contains one or more cycloalkyl groups in the molecular.

6. The resin composition according to claim 1, wherein the radically curable monomer is a multifunctional acrylate-based monomer.

7. The resin composition according to claim 6, wherein the multifunctional acrylate-based monomer includes one or more selected from the group consisting of hexanediol diacrylate (HDDA), tripropylene glycol diacrylate (TPGDA), ethylene glycol diacrylate (EGDA), trimethylolpropane triacrylate (TMPTA), trimethylolpropane ethoxy triacrylate (TMPEOTA), glycerol propoxylated triacrylate (GPTA), pentaerythritol tri(tetra)acrylate (PETA), and dipentaerythritol hexaacrylate (DPHA).

8. The resin composition according to claim 6, wherein a weight ratio of the cationically curable monomer and the radically curable monomer is 2:8 to 9:1.

9. The resin composition according to claim 1, which further comprises an inorganic fine particle.

10. A polarizer protective film comprising: a substrate; and a coating layer formed on at least one surface of the substrate, wherein the coating layer includes a cured resin of the cationically curable monomer; and a cured resin of the radically curable monomer.

11. The polarizer protective film according to claim 10, wherein the cationically curable monomer contains one or more epoxy groups in the molecular.

12. The polarizer protective film according to claim 10 wherein the cationically curable monomer contains one or more cycloalkyl groups in the molecular.

13. The polarizer protective film according to claim 10, wherein a weight ratio of the cationically curable monomer and the radically curable monomer is 2:8 to 9:1.

14. The polarizer protective film according to claim 10, wherein the radically curable monomer is a multifunctional acrylate-based monomer.

15. The polarizer protective film according to claim 14, wherein the multifunctional acrylate-based monomer includes one or more selected from the group consisting of hexanediol diacrylate (HDDA), tripropylene glycol diacrylate (TPGDA), ethylene glycol diacrylate (EGDA), trimethylolpropane triacrylate (TMPTA), trimethylolpropane ethoxy triacrylate (TMPEOTA), glycerol propoxylated triacrylate (GPTA), pentaerythritol tri(tetra)acrylate (PETA), and dipentaerythritol hexaacrylate (DPHA).

16. The polarizer protective film according to claim 10, which further comprises an inorganic fine particle.

17. The polarizer protective film according to claim 10, wherein a thickness of the coating layer is 2 to 50 µm.

18. A polarizing plate including: a polarizer; an adhesive layer; and a polarizer protective film of any one of claims 10 to 17.

19. The polarizing plate according to claim 18, wherein the polarizer protective film is an upper protective film and the lower portion of the polarizer does not include a polarizer protective film.

20. The polarizer protective film according to claim 18, having a pencil hardness of 3H or more as measured under a load of 500g in accordance with ASTM D3363.

21. The polarizing plate according to claim 18, exhibiting a modulus of 4 GPa or more as measured by Nano indentation method.

22. The polarizing plate according to claim 18, exhibiting a hardness of 0.4 GPa or more as measured by Nano indentation method.
